# EUROPÄISCHE PATENTSCHRIFT

(11) **EP 1 794 052 B1**
(45) Veröffentlichungstag und Bekanntmachung des Hinweises auf die Patenterteilung: **08.04.2009**
(21) Anmeldenummer: 05777587.6
(22) Anmeldetag: 11.08.2005
(51) Int. Cl.: B64D 11/06

(54) **SITZBEFESTIGUNGSVORRICHTUNG**
SEAT FIXING DEVICE
DISPOSITIF DE FIXATION D'UN SIEGE

(30) Priorität: 30.09.2004 DE 102004047455
(43) Veröffentlichungstag der Anmeldung: 13.06.2007
(73) Patentinhaber: Recaro Aircraft Seating GmbH & Co. KG, 74523 Schwäbisch Hall (DE)
(72) Erfinder: FREY, Andreas, 88090 Immenstaad (DE)
(74) Vertreter: Daub, Thomas
(86) Internationale Anmeldenummer: PCT/EP2005/008705
(87) Internationale Veröffentlichungsnummer: WO 2006/037397

(56) Entgegenhaltungen:
- US-A- 4 213 593
- US-A- 4 787 577

## Beschreibung

Die Erfindung betrifft eine Sitzbefestigungsvorrichtung, insbesondere zum Befestigen von Fluggastsitzen an einem Boden eines Luftfahrzeuges, der mindestens eine Befestigungsschiene aufweist, die in der Art eines Hohlprofiles ausgebildet ist, das an seiner dem Fluggastsitz zugewandten Oberseite mit einem von den freien Profilflanken des Hohlprofiles begrenzten Längskanal versehen ist, der in einem vorgebbaren Rastermaß seinen freien Eintrittsquerschnitt verbreiternde Durchtrittsöffnungen aufweist, die dem Durchgriff mindestens eines Rastteiles eines Verriegelungskörpers dienen, der bei einer Relativbewegung des jeweiligen Rastteiles quer zur Längsachse der Befestigungsschiene in klemmende Anlage bringbar ist mit den Profilflanken des Hohlprofiles.

Dahingehende Sitzbefestigungsvorrichtungen und Systeme dienen dazu, Fluggastsitze in einem vorgebbaren Aufstellungsmuster mit vorgebbaren Abständen in Längsrichtung des Flugzeuges gesehen anzuordnen und dergestalt eine Flugzeugkabine zu bestuhlen. Dabei laufen mehrreihig nebeneinander in Längsrichtung des Flugzeugrumpfes mehrere Befestigungsschienen im Boden der Kabine. Regelmäßig wird dabei ein Fluggastsitz oder eine Reihe nebeneinander angeordneter Fluggastsitze als Sitzeinheit mit ihren Ständerfüßen an den Befestigungsschienen nach dem vorgebbaren Bestuhlungsmuster fest angelenkt, wobei in Längsrichtung der Ständerfüße zwei Paare an Fußteilen an zwei parallel nebeneinander liegenden Befestigungsschienen mittels sogenannter Verrastungskörper lösbar festgelegt werden. Ferner können mit dahingehenden Sitzbefestigungsvorrichtungen auch Lasten innerhalb der Flugzeugkabine verzurrt und derart festgelegt werden.

Bei den bekannten Lösungen an Sitzbefestigungsvorrichtungen, wie sie auf dem Markt frei zu erhalten sind, weist ein Grundkörper ein Aufsetzteil zum Aufsetzen auf die Befestigungsschiene auf sowie an seiner der Befestigungsschiene gegenüberliegenden Oberseite ein Festlegeauge auf zum Fixieren eines Befestigungsbolzens des jeweiligen Ständerfußes für den Fluggastsitz. Auf seiner der Befestigungsschiene zugewandten Seite weist der Grundkörper paarweise in Längsrichtung gegenüberliegende Rastteile mit tellerkreisförmigem Querschnitt auf, die in Längsrichtung des Grundkörpers voneinander beabstandet paßgenau in Eingriff bringbar sind mit den Durchtrittsöffnungen der Befestigungsschiene. Dergestalt läßt sich der Grundkörper mit seinen Rastteilen teilweise in die Durchtrittsöffnungen einsetzen und durch Längsverschieben des Grundkörpers gegenüber der festgelegten Befestigungsschiene um einen Rasterabstand an Durchtrittsöffnungen gelangen die Rastteile in untergreifende Anlage mit den freien Profilflanken der hohlprofilartigen Befestigungsschiene. Auf der gegenüberliegenden Seite weist die bekannte Lösung eine stegartige Verbreiterung an dem Grundkörper auf, wobei sich die dahingehende Verbreiterung an der Oberseite der Profilflanken der Befestigungsschiene abstützt und eine zwischen den beiden Paaren an Rastteilen des Grundkörpers angeordnete Durchtrittsöffnung übergreift.

Bei den bekannten Lösungen weist dann der jeweilige Grundkörper ein Aufsetzteil auf, das man in der Fachsprache auch mit "Plunger" bezeichnet, das mittels einer Festlegeeinrichtung des Grundkörpers quer zur Längsverfahrbarkeit desselben auf und ab bewegbar ist, wobei in der abgesenkten Stellung weitere Rastteile des Aufsetzteils in die zuordenbaren Durchtrittsöffnungen der Profilschiene paßgenau eingreifen und dergestalt in Längsrichtung das Aufsetzteil in seiner Lage auf der Befestigungsschiene sichern, das ansonsten gegen vertikales Abheben durch die Rastteile gesichert ist, die die freien Profilflanken der Befestigungsschiene untergreifen. Durch Anziehen eines Befestigungsmittels der Festlegeeinrichtung werden dann zum einen definitiv die weiteren Rastteile des Aufsetzteiles (Plunger) in ihrer Lage an der Befestigungsschiene fixiert und im übrigen die sonstigen Rastteile des Grundkörpers gegen die Profilflanken der hohlkammerartigen Befestigungsschiene verspannt, so dass sowohl in axialer als auch in radialer Richtung ein sicherer Halt des Grundkörpers an der Befestigungsschiene erreicht ist.

Durch die US 3,241,501 ist ein Sitzbefestigungssystem bekannt, bei dem die Rastteile eines Grundkörpers ohne weitere Relativbewegung entlang der Längsrichtung der Befestigungsschiene in Eingriff bringbar sind mit dem zuordenbaren Ausnehmungen innerhalb zweier benachbarter Profilflanken des Hohlprofiles als Befestigungsschiene. Mit diesem Grundkörper starr verbunden, ist ein plattenartiges Aufsetzteil, das an seiner Unterseite mit weiteren Rastteilen versehen ist, die in einem vorgebbaren Rastermaß in der Befestigungsschiene sich im freien Eintrittsquerschnitt verbreiternde Durchtrittsöffnungen durchgreifen. Ein mittig angeordnetes weiteres Rastteil, als Bestandteil eines Betätigungszapfens, ist zwischen den beiden anderen Rastteilen des Grundkörpers über eine Griffschlaufe axial längs verschiebbar im Grundkörper geführt und entgegen der Federkraft einer Druckfeder aus einer Grundstellung, bei der das mittlere weitere Rastteil in Eingriff ist mit der ihm zuordenbaren Durchtrittsöffnung in eine Betätigungsstellung herausziehbar, bei der ein Ritzel des Betätigungszapfens in Eingriff kommt mit Ritzeln der benachbart angeordneten Rastteile des Grundkörpers.

Wird nun die Griffschlaufe von Hand um 90° verschwenkt, wird der aufgezeigte Ritzelantrieb betätigt und die Rastteile des Grundkörpers werden über diesen Ritzeltrieb in eine Verriegelungsstellung quer zur Längsrichtung der Befestigungsschiene verschwenkt, bei der konisch zulaufende Fußteile der Rastteile die jeweiligen Profilflanken des Hohlprofiles als Befestigungsschiene untergreifen. In der dahingehenden Verriegelungsstellung sind dann zumindest die außenseitig angeordneten weiteren Rastteile des Aufsetzteiles in Eingriff mit den Durchtrittsöffnungen verbreiterten Querschnitts. Ein Lösevorgang des Sitzbefestigungssystems von der zuordenbaren Befestigungsschiene ist entsprechend in umgekehrter Reihenfolge wie beschrieben möglich. Obwohl diese bekannte Lösung den Vorteil hat, dass ohne weitere Längsverschiebung in Längsrichtung der Befestigungsschiene das Befestigungssystem direkt auf der Schiene festlegbar ist, ist für den eigentlichen Verriegelungsvorgang das Verschwenken der Rastteile des Grundkörpers um 90° aus einer Ausgangsstellung heraus notwendig, so dass es dergestalt zu Hemmnissen im Betrieb kommen oder gar zu einer Beschädigung der relativ empfindlichen Profilflanken des Hohlprofiles, insbesondere wenn dieses aus Gewichtsgründen aus Leichtmetallwerkstoffen aufgebaut sein sollte.

Obwohl bei den vorstehend beschriebenen bekannten Lösungen eine sichere Ableitung von Crashkräften, die auf den Fluggastsitz einwirken können in die Bodenstruktur der Flugzeugkabine mit ihren Befestigungsschienen erreicht ist, ist nachteilig der sich in der Praxis ergebende erhöhte Montageaufwand und die bestehenden Systeme sind nicht für einen häufigen Ein- oder Umbau geeignet. Ferner sind wie dargelegt Funktionsstörungen durch Hemmungen im Betrieb nicht ausgeschlossen und im Hinblick auf den konstruktiv teilweise komplizierten Aufbau sind die bekannten Systeme teuer in der Herstellung. Durch die US 4 787 577und 4 213 593 ist ein Befestigungssystem mit Exzentertrieb bekannt.

Ausgehend von diesem Stand der Technik liegt der Erfindung die Aufgabe zugrunde, die bekannten Sitzbefestigungsvorrichtungen und Systeme dahingehend weiter zu verbessern, dass sie sich kostengünstig realisieren und einfach und funktionssicher montieren lassen bei gleichzeitiger Erhöhung des Sitzkomfortes für ein derart festgelegten Sitz an einem Kabinenboden Eine dahingehende Aufgabe löst eine Sitzbefestigungsvorrichtung mit den Merkmalen des Patentanspruches 1 in seiner Gesamtheit.

Dadurch, dass gemäß dem kennzeichnenden Teil des Patentanspruches 1 für die genannte Relativbewegung des jeweiligen Rastteils quer zur Längsachse der Befestigungsschiene ein Exzentertrieb des Verriegelungskörpers vorgesehen ist, sind die bestehenden Vorrichtungen und Systeme dahingehend weiter verbessert, dass sich der Montageaufwand vor Ort reduzieren läßt und insbesondere bei häufigen Ein- und Umbaumaßnahmen treten die Vorteile der erfindungsgemäßen Befestigungsvorrichtung deutlich zutage. Über einen einfach zu bewerkstelligenden Schwenkvorgang bei dem Verriegelungskörper läßt sich eine sichere mechanische Verriegelung zwischen diesem und der Befestigungsschiene herbeiführen, wobei insbesondere dergestalt eine reibschlüssige Verbindung zwischen Verriegelungskörper und Befestigungsschiene erhalten ist.

Der Exzentertrieb des Verriegelungskörpers erlaubt mit geringen Betätigungskräften und materialschonend immer genau definierte Festlege- und Lösemöglichkeiten für die Sitzbefestigungsvorrichtung an der Befestigungsschiene. Da der Exzentertrieb des Verriegelungskörpers eine eindeutig erkennbare Position einnimmt in seiner gelösten oder seiner verriegelten Stellung kann optisch rasch eine Plausibilitätsprüfung daraufhin durchgeführt werden, ob die Sitzbefestigung aktiv ist oder nicht, was den Anforderungen an eine erhöhte Sicherheit zugute kommt. Die erfindungsgemäße Sitzbefestigungsvorrichtung benötigt wenig bewegbare Komponenten, baut somit klein auf und ist aufgrund der geringen Teilevielzahl kostengünstig herstellbar. Auch ist dergestalt eine Gewichtsersparnis erreichbar.

Bei der erfindungsgemäßen Sitzbefestigungsvorrichtung weist der Exzentertrieb ein stangenförmiges Betätigungsteil auf, an dessen einem freien Ende sich das Rastteil anschließt und dass im Bereich seines anderen freien Endes von einem weiteren Betätigungsteil durchgriffen ist, das außerhalb der Schwenkachse in eine Exzenterbuchse eingreift, die bei ihrer Schwenkbewegung von einer Freigabestellung in eine Festlegestellung über die beiden Betätigungsteile, das jeweilige Rastteil durch die genannte Relativbewegung festlegend gegen die Profilflanken des Hohlprofiles verspannt. Aufgrund des Exzentertriebes ist eine Überzenterung der vorgesehenen Rast- und Betätigungsteile in der Sperr- oder Festlegestellung möglich, so dass auch bei in das System eingeleiteten Schwingungen und Stößen -auch im Crashfall- eine ungewollte Freigabe mit Sicherheit vermieden ist.

Bei einer bevorzugten Ausführungsform der erfindungsgemäßen Sitzbefestigungsvorrichtung ist neben dem Verriegelungskörper mindestens ein Aufsetzteil vorhanden, das an seiner dem jeweiligen Rastteil zugewandten Seite mindestens ein weiteres Rastteil aufweist, das zu dem einen jeweiligen Rastteil ein Rasterabstandsmaß aufweist, das ungleich dem Abstandsmaß der Durchtrittsöffnungen im Hohlprofil der Befestigungsschiene ist. Durch Hinzuziehen oder Beifügen mindestens eines weiteren Aufsetzteiles zu den sonstigen Komponenten der Sitzbefestigungsvorrichtung ist es möglich, die beschriebene Exzenter-Lösung derart weiter auszubauen, dass eine Festlegemöglichkeit für den sogenannten "Rear Stud"-Bereich geschaffen ist. Der Rear Stud-Bereich betrifft in Flugrichtung gesehen den hinteren Festlegebereich der Ständerbeine des Fluggastsitzes, wo aufgrund einer schrägen Krafteinleitung, bewirkt durch die Schrägstellung der Ständerbeine mit im Crashfall besonders großen auftretenden Kräften zu rechnen ist. Durch das mindestens eine zusätzliche Aufsetzteil ist dann eine sichere Krafteinleitung in die Bodenstruktur über die Hohlprofilschiene erreicht.

Bei einer weiteren besonders bevorzugten Ausführungsform der erfindungsgemäßen Sitzbefestigungsvorrichtung ist ein Energiespeicher vorhanden, der auftretende Schwingungen oder Stöße in die jeweilige Befestigungsschiene ableitet. Vorzugsweise ist dabei vorgesehen, dass der Energiespeicher aus mindestens einer Tellerfeder gebildet ist, die sich einerseits am Exzentertrieb, andererseits an feststehenden Teilen wie Gehäuse, Schienenteilen oder dergleichen abstützt. Der angesprochene Energiespeicher erlaubt den Ausgleich von Toleranzen, so dass der Beschlag in Form der Sitzbefestigungsvorrichtung immer fest an der Befestigungsschiene anliegt. Dergestalt ist auch die Verwirklichung der sogenannten Anti-Rattle-Funktion ermöglicht, was mit dazu beiträgt den Sitzkomfort für den Passagier deutlich zu erhöhen.

Weitere vorteilhafte Ausführungsformen der erfindungsgemäßen Sitzbefestigungsvorrichtung sind Gegenstand der sonstigen Unteransprüche.

Im folgenden wird die erfindungsgemäße Sitzbefestigungsvorrichtung anhand zweier Ausführungsbeispiele nach der Zeichnung näher erläutert.

Dabei zeigen in prinzipieller und nicht maßstäblicher Darstellung die
- Fig. 1 eine perspektivische Draufsicht auf einen Teil der Sitzbefestigungsvorrichtung als sog. "Front Stud"-Lösung;
- Fig. 2 einen Längsschnitt durch den Gegenstand nach der Fig. 1 entlang der Linie I-I;
- Fig. 3 eine perspektivische Draufsicht auf einen Teil einer zweiten Ausführungsform der erfindungsgemäßen Sitzbefestigungsvorrichtung, und
- Fig. 4 in perspektivischer Draufsicht einen Ausschnitt auf die als Hohlprofil ausgebildete Befestigungsschiene, wie sie Unterflur im Kabinenbodenbereich, beispielsweise eines Flugzeuges in Mehrfach-Nebeneinanderanordnung verläuft.

Die erfindungsgemäße Sitzbefestigungsvorrichtung mit ihren beiden Ausführungsformen gemäß den Darstellungen nach den Figuren dient insbesondere dem Befestigen von Fluggastsitzen (nicht dargestellt) an einem Boden (Kabinenboden) eines Luftfahrzeuges. Die dahingehende Sitzbefestigungsvorrichtung läßt sich aber auch gegebenenfalls in anderen Bereichen einsetzen, beispielsweise im Bereich von Fahrzeugen wie Reisebussen, Schiffsfähren oder dergleichen; kann aber auch Verwendung finden im Rahmen einer Saalbestuhlung, beispielsweise für eine Kongreßhalle, einen Theatersaal oder dergleichen. Ferner läßt sich die Sitzbefestigungsvorrichtung auch zum Festzurren von Lasten, Gepäck oder sonstigem Transportgut mittels Flug- und Fahrzeugen jedweder Art verwenden.

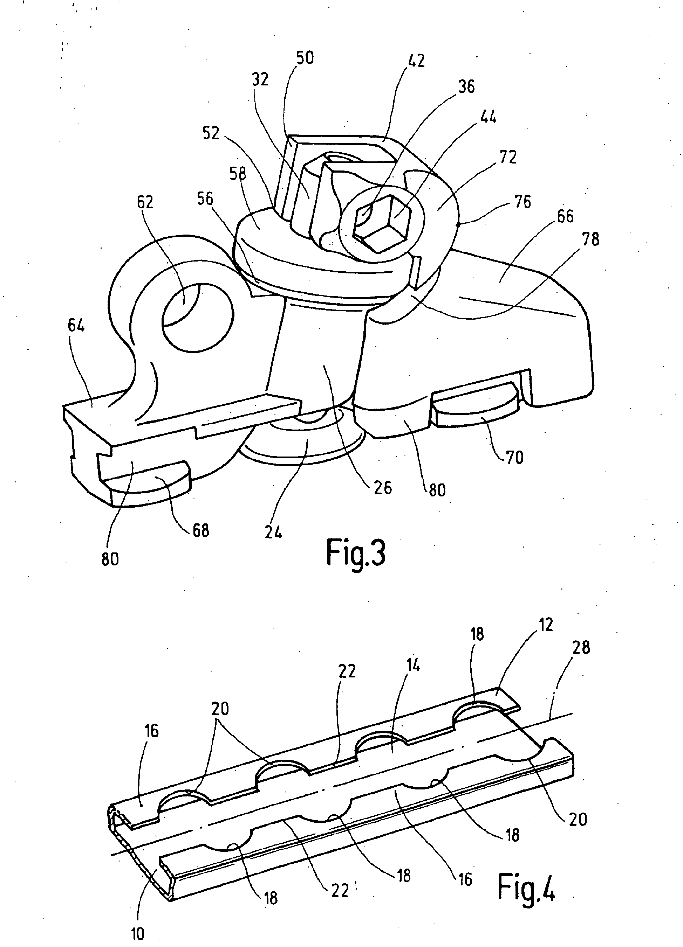

Die Sitzbefestigungsvorrichtung weist eine Befestigungsschiene 10 auf (vgl. Fig. 4), die in der Art eines Hohlprofiles ausgebildet ist. Mehrere dahingehender Befestigungsschienen 10 verlaufen vorzugsweise in Längsrichtung des Kabinenbodens eines Luftfahrzeuges, wobei die jeweilige Befestigungsschiene 10 mit ihrer Oberseite 12, vorzugsweise bündig im Kabinenboden eines Luftfahrzeuges integriert ist. Die Oberseite 12 einer jeden Befestigungsschiene 10 geht somit bündig in die Oberseite des Kabinenbodens über. Zwei oder mehrere parallel zueinander verlaufende Befestigungsschienen 10 dienen dann dem Aufstuhlen an Fluggastsitzen innerhalb der Flugzeugkabine, wobei ein einzelner Fluggastsitz oder mehrere in Reihe nebeneinander angeordnete Fluggastsitze als Gesamtheit sich mit den Befestigungsschienen 10 über die erfindungsgemäße Sitzbefestigungsvorrichtung mit dem Boden verbinden lassen.

Soll die jeweilige Flugzeugkabine dem Transport von Lasten dienen, besteht wie vorstehend bereits angedeutet auch die Möglichkeit die Bestuhlung wieder zu räumen und über das noch näher zu beschreibende Sitzbefestigungssystem lassen sich nicht nur Fluggastsitze an den Befestigungsschienen 10 anbringen, sondern Lasten auch dergestalt in der Kabine über die Befestigungsschienen 10 verzurren. Des weiteren kann das erfindungsgemäße Sitzbefestigungssystem dazu dienen, einen Fluggastsitz mit nur einem Ständerfuß zu befestigen, oder sofern die Aufständerkonstruktion des Sitzes über mehrere Stuhlbeine verfügt, diese im vorderen Bereich sowie im hinteren Bereich eines Sitzes dergestalt am Kabinenboden festzulegen.

Das genannte Hohlprofil einer Befestigungsschiene 10 begrenzt an seiner Oberseite 12 einen Längskanal 14, der von den beiden freien einander zugewandten Profilflanken 16 des Hohlprofiles begrenzt ist. Der dahingehende Längskanal 14 weist in einem vorgebbaren Rastermaß seinen freien Eintrittsquerschnitt verbreiternde Durchtrittsöffnungen 18 auf, wobei die Durchtrittsöffnungen 18 voneinander vorzugsweise einen gleichmäßigen Abstand aufweisen. Die Durchtrittsöffnungen 18 sind vorzugsweise in der Art von Bohrungen ausgebildet und münden mit benachbart gegenüberliegenden bogenförmigen Kreissegmenten 20 in die freien Enden der Profilflanken 16 ein, die einen Längsrand 22 beiderseits des Längskanales 14 mit seinem Eintrittsquerschnitt ausbilden.

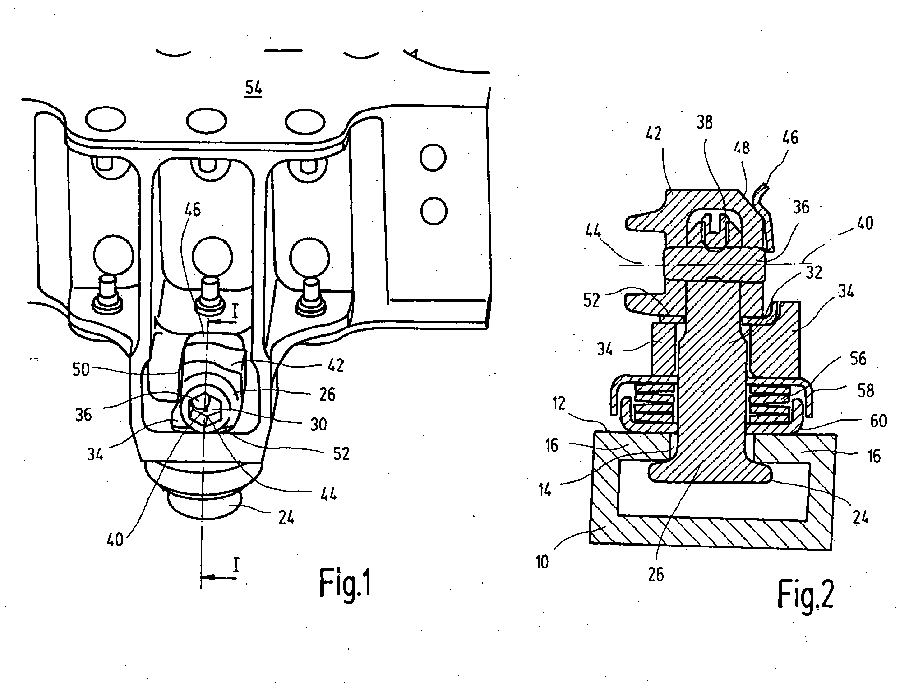

Die genannten Durchtrittsöffnungen 18 dienen dem Durchgriff mindestens eines Rastteiles 24 eines Verriegelungskörpers 26, der bei einer Relativbewegung des Rastteiles 24 (vgl. Fig. 1 und 2) quer zur Längsachse 28 der Befestigungsschiene 10 in klemmende Anlage bringbar ist mit den Profilflanken 16 des Hohlprofiles 14. Für die genannte Relativbewegung ist ein Exzentertrieb 30 des Verriegelungskörpers 26 vorgesehen.

Insbesondere die Fig. 2 zeigt, dass der Exzentertrieb 30 ein stangenförmiges Betätigungsteil 32 aufweist, das axial längsverfahrbar in einem Gehäuseteil 34 des Verriegelungskörpers 26 in Blickrichtung auf die Fig. 2 gesehen auf und ab bewegbar ist. An dem einen in Blickrichtung auf die Fig. 2 gesehen unteren freien Ende des Betätigungsteiles 32 schließt sich das Rastteil 24 an und im Bereich des anderen freien Endes des Betätigungsteiles 32 ist dieses von einem weiteren bolzenförmigen Betätigungsteil 36 durchgriffen, das über eine Madenschraube 38 in dem Betätigungsteil 32 gesichert ist und das außerhalb der Schwenk- oder Drehachse 40 einer Exzenterbuchse 42 in diese eingreift. Bei der Schwenkbewegung der Exzenterbuchse 42 um ihre mittig angeordnete Schwenkachse 40 von einer Freigabestellung in eine Festlegestellung gemäß der Darstellung nach der Fig. 2 werden über die beiden Betätigungsteile 32, 36 das Rastteil 24 durch die genannte Relativbewegung festlegend gegen die Profilflanken 16 des Hohlprofiles verspannt.

Für ihre Schwenkbewegung weist die Exzenterbuchse 42 eine Handhabe auf, die gemäß dem ersten Ausführungsbeispiel nach den Fig. 1 und 2 in Form einer Angriffsmöglichkeit für ein Betätigungswerkzeug, beispielsweise in der Art eines Innensechskantschlüssels (nicht dargestellt) gebildet ist. Hierfür ist in Blickrichtung auf die Fig. 1 gesehen an der dem Betrachter zugewandten Stirnseite der Exzenterbuchse 42 die Angriffsmöglichkeit für das Betätigungswerkzeug in Form einer Innensechskantausnehmung 44 geschaffen. Des weiteren ist eine Rasteinrichtung 46 vorgesehen, die ein federndes Rastblech aufweist, das in vorgebbaren Schwenkstellungen der Exzenterbuchse 42 diese festlegt, wobei gemäß der Darstellung nach der Fig. 2 die dahingehende Verrastung in der Verriegelungsstellung erfolgt und eine obere Auskehlung des Rastbleches liegt an einer rückwärtigen Abschrägung 48 der Exzenterbuchse 42 an. Anstelle der gezeigten Rasteinrichtung 46 könnte hier auch eine andere Anschlageinrichtung zum Einsatz kommen. Durch eine entsprechende Schwenkbewegung der Exzenterbuchse 42 läßt sich jedenfalls mit den üblichen Handbetätigungskräften die dahingehende Verrastung lösen. Gegebenenfalls besteht die Möglichkeit eine dahingehende Verrastung sowohl in der Festlegestellung als auch in der Freigabestellung für das Rastteil 24 der Sitzbefestigungsvorrichtung vorzusehen, um dergestalt eine definierte Endlagensituation zu erreichen.

Des weiteren weist die Exzenterbuchse 42 außenumfangseitig eine sogenannte Abgleitfläche 50 auf, sowie eine quer dazu verlaufende, unten liegende Festlegefläche 52. Die dahingehenden Flächen erleichtern den Wechsel von der Freigabe - in die Verriegelungsstellung, und umgekehrt. Soll beispielsweise in Blickrichtung auf die Fig. 1 gesehen die Verriegelung des Verriegelungskörpers 26 gelöst werden, wird entgegen dem Uhrzeigersinn über den Innensechskantschlüssel die Festlegefläche 52 entgegen dem Angriff durch die Rasteinrichtung 46 (Federblech) nach rechts weggeschwenkt und die links liegende Abgleitfläche 50 gelangt in Position der Festlegefläche 52 in ihrer Verriegelungsstellung. Bei der dahingehenden Schwenkbewegung der Exzenterbuchse 42 wird über das weitere Betätigungsteil 36 das Betätigungsteil 32 nach unten gedrückt und das Rastteil 24 mit seinen beiden Untergriffsflanken kommt von den Profilflanken 16 frei. Wird nun der ursprünglich festgelegte Verriegelungskörper 26 in Richtung der Längsachse 28 der Befestigungsschiene 10 mit seinem Rastteil 24 um ein halbes Rastermaß zwischen zwei benachbarten Durchtrittsöffnungen 18 verschoben, gelangt das Rastteil 24 mit seiner zylindrischen Außenumfangsfläche paßgenau außer Eingriff mit der zuordenbaren Durchtrittsöffnung 18 und der Verriegelungskörper 26 kann von der Befestigungsschiene 10 nach oben abgehoben werden. Ein Festlegevorgang für den Verriegelungskörper 26 kann dann in umgekehrter Reihenfolge gegebenenfalls an anderer Stelle erneut erfolgen. In diesem Fall ist in Blickrichtung auf die Fig. 1 gesehen die Exzenterbuchse 42 im Uhrzeigersinn um 90° zu verschwenken, wobei das weitere Befestigungsteil 36 exzentrisch dann angehoben wird, wobei dergestalt eine Überzenterung vorgesehen sein kann, dass die Längsachse des weiteren Betätigungsteiles 36 oberhalb der Schwenkachse 40 der Exzenterbuchse 42 zu liegen kommt. Dergestalt ist ein ungewolltes Lösen auch bei Einleiten von Erschütterungen oder Stößen mit Sicherheit vermieden, wozu auch die Rasteinrichtung 46 im bereits aufskizzierten Rahmen mit beiträgt.

Die Lösung nach den Fig. 1 und 2 dient insbesondere dem Festlegen eines Fluggastsitzes als sogenannte Front Stud-Lösung, bei der ein vorderes Sitz- oder Rahmenfußteil 54 in der Art einer Punktauflagerung festgelegt wird. Um den Komfort für den Sitzbenutzer zu erhöhen, ist ein Energiespeicher 56 vorhanden in Form eines sogenannten Doppeltellerfederpaketes (vgl Fig. 2), der in der Lage ist auftretende Schwingungen oder Stöße in die jeweilige Befestigungsschiene 10 abzuleiten und mithin in die Grundstruktur des Kabinenbodens. Der dahingehende Energiespeicher 56 stützt sich in Blickrichtung auf die Fig. 2 gesehen mit seinem oberen Ende an einem ihn übergreifenden Abdeckteil 58 ab, das wiederum ein nach oben vorgewölbtes Unterteil 60 abdeckt, das sich an der Oberseite 12 der Befestigungsschiene 10 in der Verriegelungsstellung der Sitzbefestigungsvorrichtung abstützt. Die Oberseite des Abdeckteiles 58 stützt sich wiederum an dem Gehäuseteil 34 der Sitzbefestigungsvorrichtung ab. Aufgrund der in jeder Lage des Energiespeichers 56 ineinander greifenden Abdeckteile 58 und 60 ist das Tellerfederpaket vor Verschmutzungen geschützt und es besteht für einen Monteur dergestalt auch keine Verletzungsgefahr.

Bei der weiteren Ausführungsform nach der Fig. 3 werden dieselben Baukomponenten wie bei dem ersten Ausführungsbeispiel auch mit denselben Bezugszeichen versehen, so dass die bisher getroffenen Ausführungen zum ersten Ausführungsbeispiel auch für das weitere Ausführungsbeispiel nach der Fig. 3 gelten. Insbesondere weist auch die Ausführungsform nach der Fig. 3 die Kernidee einer Festlegemöglichkeit des Rastteiles 24 mittels Exzentertrieb 30 auf, wobei die Ausführungsform nach der Fig. 3 als sog. "Rear Stud-Lösung" für den hinteren Fluggastsitzbereich konzipiert ist, um dergestalt insbesondere schräg eingeleitete Kräfte des Sitzfußes über das Aufnahmeauge 62, an dem der jeweilige zuordenbare Ständerfuß (nicht dargestellt) angreift in die Bodenstruktur ableitbar ist. Hierfür weist der Verriegelungskörper 26 beidseits jeweils ein Aufsetzteil 64, 66 auf, wobei das in Blickrichtung auf die Fig. 3 gesehen vordere Aufsetzteil 64 die Aufnahme 62 trägt.

Das jeweilige Aufsetzteil 64, 66 weist an seiner dem Rastteil 24 zugewandten Seite ein weiteres Rastteil 68, 70 auf, die außenumfangseitig von ihren geometrischen Abmessungen her dem Außenumfang des Rastteiles 24 nachempfunden sind. Das Rasterabstandsmaß der dahingehenden Rastteile 24, 68 und 70 ist ungleich zu dem Abstandsmaß der Durchtrittsöffnungen 18 im Hohlprofil der Befestigungsschiene 10. Zum Festlegen der Sitzbefestigungsvorrichtung nach der Fig. 3 wird zunächst durch Verschwenken des Handhebels 72 entgegen dem Uhrzeigersinn das weitere Betätigungsteil 36 und mithin das stangenförmige Betätigungsteil 32 nach unten bewegt, so dass dergestalt sich der axiale Abstand zwischen Rastteil 24 und Unterseite der Vorrichtung vergrößert. Das Rastteil 24 wird dann in eine zugeordnete Durchtrittsöffnung 18 eingeführt, wobei die weiteren Rastteile 68, 70 mit ihren beidseits gegenüberliegenden Profilflanken auf der Oberseite 12 der Befestigungsschiene 10 aufsitzen. Durch axiales Verschieben entlang der Längsachse 28 der Befestigungsschiene 10 um ein halbes Abstandsmaß gerät das Rastteil 24 in untergreifenden Eingriff mit den beiden Profilflanken 16 und beim Festlegen des Rastteiles 24 über den Exzentertrieb senken sich die weiteren Rastteile 68, 70 in die zuordenbaren Durchtrittsöffnungen 18 solange ab, bis die Kreissegmente 20 der zuordenbaren Durchtrittsöffnungen 18 in Anlage sind mit den umfangseitigen freien Rändern der beiden weiteren Rastteile 68, 70.

Für eine Betätigung des Exzentertriebes 30 kann auch die gleichfalls vorhandene Innensechskantausnehmung 44 zusätzlich oder alternativ dienen. Der Handhebel 72 ist im rückwärtigen Bereich der Exzenterbuchse 42 angeordnet, die hier mit zwei gegenüberliegenden Schenkelstücken das freie Ende des Betätigungsteiles 32 umfasst, wobei eine konvexe Führungsfläche 76 des Handhebels 72 sich an einer entsprechend konkav ausgestalteten Gleitfläche 78 des hinteren Aufsetzteiles 66 abstützen kann, was derart gleichfalls ein ungewolltes Lösen verhindern kann. Im festgelegten Zustand des derart modifizierten Befestigungssystems sind dann die beiden Profilflanken 16 der Befestigungsschiene 10 in einem Längskanalbereich 80 geführt, gebildet aus den korrespondierenden Überständen der beiden Aufsetzteile 64, 66 sowie des Verriegelungskörpers 26. Bei der geänderten Lösung nach der Fig. 3 ist das Tellerfederpaket und mithin der Energiespeicher 56 im oberen Bereich der Vorrichtung angeordnet und das obere Abdeckteil 58 ist in Anlage mit der Festlegefläche 52 an der Unterseite der Exzenterbuchse 42 in ihrer in der Fig. 3 dargestellten verriegelten Position. Wird in Blickrichtung auf die Fig. 3 gesehen für einen Lösevorgang die Exzenterbuchse 42 entgegen dem Uhrzeigersinn hochverschwenkt, gleitet die Festlegefläche 52 ab und die in Blickrichtung auf die Fig. 3 gesehen dem Betrachter zugewandte Abgleitfläche 50 gelangt auf die Unterseite und somit in Anlage mit der Oberseite des Abdeckteils 58. Zusätzlich können bei der sog. Front-Stud-Lösung im Boden-Grundrahmen als Durchtrittsöffnungen 18 Langlöcher vorgesehen sein, in denen sich der jeweilige Fitting auch seitlich quer zur Längsrichtung der Befestigungsschiene verschieben läßt. Damit ist ein Ausgleich der Quertoleranzen möglich, die zwischen den einzelnen Sitzschienen 10 des Boden-Grundrahmens gegeben sind.

Mit dem erfindungsgemäßen Exzentertrieb bei Sitzbefestigungsvorrichtungen lassen sich funktionssicher und mit sehr geringem Montageaufwand die notwendigen Befestigungsaufgaben lösen.

## Patentansprüche

1. Sitzbefestigungsvorrichtung zum Befestigen von Fluggastsitzen an einem Boden eines Luftfahrzeuges, mit mindestens einer Befestigungsschiene (10), die in der Art eines Hohlprofiles ausgebildet ist, das an seiner dem Fluggastsitz zugewandten Oberseite (12) mit einem von den freien Profilflanken (16) des Hohlprofiles begrenzten Längskanal (14) versehen ist, der in einem vorgebbaren Rastermaß seinen freien Eintrittsquerschnitt verbreiternde Durchtrittsöffnungen (18) aufweist, die dem Durchgriff mindestens eines Rastteiles (24) eines Verriegelungskörpers (26) dienen, der bei einer Relativbewegung des jeweiligen Rastteiles (24) quer zur Längsachse (28) der Befestigungsschiene (10) in klemmende Anlage bringbar ist mit den Profilflanken (16) des Hohlprofiles (14), wobei für die genannte Relativbewegung ein Exzentertrieb (30) des Verriegelungskörpers (26) vorgesehen ist, welcher ein stangenförmiges Betätigungsteil (32) aufweist, an dessen einem freien Ende sich das Rastteil (24) anschließt und das im Bereich seines anderen freien Endes von einem weiteren Betätigungsteil (36) durchgriffen ist, **gekennzeichnet durch** eine Exzenterbuchse (42), in welche das weitere Betätigungsteil (36) außerhalb der Schwenkachse (40) derselben eingreift und die bei ihrer Schwenkbewegung von einer Freigabestellung in eine Festlegestellung über die beiden Betätigungsteile (32, 36) das jeweilige Rastteil (24) **durch** die genannte Relativbewegung festlegend gegen die Profilflanken (16) des Hohlprofiles verspannt.

2. Sitzbefestigungsvorrichtung nach Anspruch 1, **dadurch gekennzeichnet, dass** die Exzenterbuchse (24) zur Veranlassung ihrer Schwenkbewegung eine Handhabe aufweist, insbesondere in Form einer Angriffsmöglichkeit für ein Betätigungswerkzeug oder in Form eines Handhebels (72).

3. Sitzbefestigungsvorrichtung nach Anspruch 1 oder 2, **dadurch gekennzeichnet, dass** eine Rasteinrichtung (46), insbesondere in Form eines federnden Rastbleches und/oder eine Anschlageinrichtung die Exzenterbuchse (42) in vorgebbaren Schwenkstellungen, insbesondere in ihrer Verriegelungsstellung lösbar hält.

4. Sitzbefestigungsvorrichtung nach einem der vorhergehenden Ansprüche, **dadurch gekennzeichnet, dass** die Exzenterbuchse (42) zumindest teilweise außenumfangsseitig mit einer Abgleitfläche (50) und einer quer dazu verlaufenden Festlegefläche (52) versehen ist, die den Wechsel von der Freigabe- in die Verriegelungsstellung und umgekehrt erleichtern.

5. Sitzbefestigungsvorrichtung nach einem der vorhergehenden Ansprüche, **dadurch gekennzeichnet, dass** neben dem Verriegelungskörper (26) mindestens ein Aufsetzteil (64, 66) vorhanden ist, das an seiner dem jeweiligen Rastteil (24) zugewandten Seite mindestens ein weiteres Rastteil (68, 70) aufweist, das zu dem einen jeweiligen Rastteil (24) ein Rasterabstandsmaß aufweist, das gleich dem Abstandsmaß der Durchtrittsöffnungen (18) im Hohlprofil der Befestigungsschiene (10) ist.

6. Sitzbefestigungsvorrichtung nach einem der vorhergehenden Ansprüche,
**dadurch gekennzeichnet, dass** die Durchtrittsöffnungen (18) innerhalb des Hohlprofiles einen kreisförmigen Querschnitt aufweisen und dass das jeweilige Rastteil (24) sowie weitere Rastteile (68, 70) kreisförmige Materialpartien aufweisen, die passgenau in die Durchtrittsöffnungen (18) einführbar sind.

7. Sitzbefestigungsvorrichtung nach einem der vorhergehenden Ansprüche, **dadurch gekennzeichnet, dass** ein Energiespeicher (56) vorhanden ist, der auftretende Schwingungen oder Stöße in die jeweilige Befestigungsschiene (10) ableitet sowie Toleranzen ausgleicht und sich mit der Befestigungsschiene (10) verspannt.

8. Sitzbefestigungsvorrichtung nach Anspruch 7, **dadurch gekennzeichnet, dass** der Energiespeicher (56) aus mindestens einer Feder, insbesondere einer Tellerfeder, gebildet ist, die sich einerseits an dem Exzentertrieb (30), andererseits an feststehenden Teilen (10, 34) abstützt.

9. Sitzbefestigungsvorrichtung nach einem der vorhergehenden Ansprüche, **dadurch gekennzeichnet, dass** in der Festlegestellung eine Überzenterung vorgesehen ist, bei welcher die Längsachse des weiteren Betätigungsteils (36) oberhalb der Schwenkachse (40) der Exzenterbuchse (42) liegt.

## Claims

1. Seat fixing device for fixing air passenger seats to an aircraft floor, with at least one fixing rail (10) which is designed in the manner of a hollow section and, on its upper side (12) facing the air passenger seat, is provided with a longitudinal channel (14) which is bounded by the free section flanks (16) of the hollow section and, in a predefinable grid, has passage openings (18) which widen the free entry cross section of said longitudinal channel and serve for at least one latching part (24) of a locking body (26) to reach through, which locking body can be brought into clamping contact with the section flanks (16) of the hollow section (14) upon a relative movement of the respective latching part (24) transversely with respect to the longitudinal axis (28) of the fixing rail (10), wherein an eccentric drive (30) of the locking body (26) is provided for said relative movement, said eccentric drive having a rod-shaped actuating part (32), one free end of which is adjoined by the latching part (24) and which, in the region of its other free end, has a further actuating part (36) reaching through it, **characterized by** an eccentric bush (42) in which the further actuating part (36) engages outside the pivot axis (40) of the bush (42) and which, upon its pivoting movement from a release position into a securing position by means of the two actuating parts (32, 36), clamps the respective latching part (24) by means of said relative movement against the section flanks (16) of the hollow section in a securing manner.

2. Seat fixing device according to Claim 1, **characterized in that,** to enable its pivoting movement, the eccentric bush (24) has a handle, in particular in the form of an engagement possibility for an actuating tool or in the form of a hand lever (72).

3. Seat fixing device according to Claim 1 or 2, **characterized in that** a latching means (46), in particular in the form of a resilient latching plate and/or a stop means, releasably holds the eccentric bush (42) in predefinable pivoted positions, in particular in its locking position.

4. Seat fixing device according to one of the preceding claims, **characterized in that** at least part of the outer circumference of the eccentric bush (42) is provided with a sliding surface (50) and a securing surface (52) running transversely with respect thereto, said surfaces facilitating the change from the release position into the locking position and vice versa.

5. Seat fixing device according to one of the preceding claims, **characterized in that** next to the locking body (26) there is at least one attachment part (64, 66) which, on its side facing the respective latching part (24), has at least one further latching part (68, 70) which has a grid spacing with respect to the first respective latching part (24) equal to the spacing of the passage openings (18) in the hollow section of the fixing rail (10).

6. Seat fixing device according to one of the preceding claims, **characterized in that** the passage openings (18) within the hollow section have a circular cross section, and **in that** the respective latching part (24) and further latching parts (68, 70) have circular material portions which can be introduced into the passage openings (18) in a precisely fitting manner.

7. Seat fixing device according to one of the preceding claims, **characterized in that** there is an energy accumulator (56) which conducts into the respective fixing rail (10) vibrations or impacts which occur, and compensates for tolerances and is clamped to the fixing rail (10).

8. Seat fixing device according to Claim 7, **characterized in that** the energy accumulator (56) is formed from at least one spring, in particular a disc spring, which is supported on one side on the eccentric drive (30) and on the other side on stationary parts (10, 34).

9. Seat fixing device according to one of the preceding claims, **characterized in that** over-centring, in which the longitudinal axis of the further actuating part (36) lies above the pivot axis (40) of the eccentric bush (42), is provided in the securing position.

## Revendications

1. Dispositif de fixation d'un siège pour fixer des sièges de passager d'aéronef au plancher d'un aéronef, avec au moins un rail de fixation (10) réalisé comme un profilé creux, pourvu, au niveau de son côté supérieur (12) orienté vers le siège de passager d'aéronef, d'un canal longitudinal (14) délimité par les flancs de profilé (16) libres du profilé creux, ledit canal présentant dans une dimension de trame prédéfinie des ouvertures de passage (18) élargissant sa section transversale d'entrée libre, lesdits ouvertures servant au passage d'au moins une partie d'arrêt (24) d'un corps de verrouillage (26) qui peut être amené par un mouvement relatif de la partie d'arrêt (24) respective perpendiculaire à l'axe longitudinal (28) du rail de fixation (10) dans une position coincée avec les flancs de profilé (16) du profilé creux (14), un actionnement excentrique (30) du corps de verrouillage étant prévu pour ledit mouvement relatif (26), ledit corps comportant une pièce d'entraînement (32) en forme de tige, la partie d'arrêt (24) étant jointe à une extrémité libre de la pièce d'entraînement (32), et qui est pénétrée dans la zone de son autre extrémité libre par une autre pièce d'entraînement (36), **caractérisé par** une douille excentrique (42) avec un axe de pivotement (40), dans laquelle l'autre pièce d'entraînement (36) s'engage à l'extérieur de l'axe de pivotement (40) et qui, lors de son mouvement de pivotement d'une position libérée dans une position fixe, resserre et fixe la partie d'arrêt (24) respective par ledit mouvement relatif contre les flancs de profilé (16) du profilé creux par l'intermédiaire des deux pièces d'entraînement (32, 36).

2. Dispositif de fixation d'un siège selon la revendication 1, **caractérisé en ce que** la douille excentrique (42) comporte, pour déclencher son mouvement de pivotement, une manette prenant notamment la forme d'une possibilité d'engagement pour un outil d'actionnement ou la forme d'un levier à main (72).

3. Dispositif de fixation d'un siège selon la revendication 1 ou 2, **caractérisé en ce qu'**un dispositif d'arrêt (46), prenant notamment la forme d'une tôle d'arrêt élastique et/ou d'un dispositif de butée, maintient la douille excentrique (42) dans des positions de pivotement prédéfinies, notamment dans sa position de verrouillage.

4. Dispositif de fixation d'un siège selon l'une quelconque des revendications précédentes, **caractérisé en ce que** la douille excentrique (42) est pourvue au moins en partie du côté du périmètre extérieur d'une surface de glissement (50) et d'une surface de fixation (52) s'étendant perpendiculairement à elle pour faciliter le passage de la position libérée dans la position de verrouillage et inversement.

5. Dispositif de fixation d'un siège selon l'une quelconque des revendications précédentes, **caractérisé en ce qu'**il y a au moins une partie de contact (64, 66) à côté du corps de verrouillage (26) qui comporte au niveau de son côté orienté vers la partie d'arrêt (24) respective au moins une autre partie d'arrêt (68, 70) comportant une dimension d'écart de trame par rapport à une partie d'arrêt (24) respective, ladite dimension étant égale à la dimension d'écart des ouvertures de passage (18) dans le profilé creux du rail de fixation (10).

6. Dispositif de fixation d'un siège selon l'une quelconque des revendications précédentes, **caractérisé en ce que** les ouvertures de passage (18) comportent une section transversale en forme de cercle à l'intérieur du profilé creux et que la partie d'arrêt (24) respective ainsi que des parties d'arrêt (68, 70) supplémentaires comportent des matériaux de forme circulaire pouvant être introduits exactement dans les ouvertures de passage (18).

7. Dispositif de fixation d'un siège selon l'une quelconque des revendications précédentes, **caractérisé par** la présence d'un accumulateur d'énergie (56) qui dévie dans le rail de fixation (10) respectif les oscillations ou secousses survenant et compensant les tolérances et se déformant avec le rail de fixation (10).

8. Dispositif de fixation d'un siège selon la revendication 7, **caractérisé en ce que** l'accumulateur d'énergie (56) est formé par au moins un ressort, notamment un ressort Belleville, qui s'appuie d'une part contre l'actionnement excentrique (30) et d'autre part contre les parties fixes (10, 34).

9. Dispositif de fixation d'un siège selon l'une quelconque des revendications précédentes, **caractérisé en ce que** dans la position fixe, un surcentrage est prévu dans lequel l'axe longitudinal de l'autre pièce d'entraînement (36) repose au-dessus de l'axe de pivotement (40) de la douille excentrique (42).
